# EUROPÄISCHE PATENTSCHRIFT

(11) **EP 3 593 987 B1**
(45) Veröffentlichungstag und Bekanntmachung des Hinweises auf die Patenterteilung: **07.09.2022**
(21) Anmeldenummer: 19185786.1
(22) Anmeldetag: 11.07.2019
(51) Int. Cl.: B32B 3/12, B32B 3/30, B32B 5/18, F16B 5/02, F16F 15/08, B32B 3/08, B32B 3/14, B32B 3/18, B32B 3/26, B32B 5/22, B32B 7/08, F16B 5/06, F16B 43/00

(54) **AKUSTISCHES BAUTEIL**
ACOUSTIC COMPONENT
COMPOSANT ACOUSTIQUE

(30) Priorität: 13.07.2018 DE 202018104035 U
(43) Veröffentlichungstag der Anmeldung: 15.01.2020
(73) Patentinhaber: Elbe Flugzeugwerke GmbH, 01109 Dresden (DE)
(72) Erfinder: Knorr, Alexander, 01109 Dresden (DE); Gärtner, Egbert, 01109 Dresden (DE)
(74) Vertreter: LKGLOBAL Lorenz & Kopf PartG mbB Patentanwälte

(56) Entgegenhaltungen:
- WO-A1-98/12045
- WO-A2-2004/063572
- CN-U- 206 419 620
- DE-A1- 19 926 585
- US-A- 4 577 450
- US-A1- 2011 114 252

## Beschreibung

### GEBIET DER ERFINDUNG

Die vorliegende Erfindung betrifft ein System umfassend wenigstens eine Stützkernverbundplatte und wenigstens ein Befestigungselement.

### HINTERGRUND DER ERFINDUNG

Sandwichkonstruktionen bestehen meist aus einem leichten Zellen- bzw. Wabenkern oder einem monolithischen Kern und zwei stabilen Deckschichten. Der Kern kann aus Schaum, Glas oder Papierwaben gefertigt sein. Die Deckschichten können aus vorimprägnierten Fasern und einer Matrix hergestellt sein oder auch metallische Lagen umfassen. Als Fasern eignen sich Glas-, Kohlenstoff- oder Polymerfasern. Als Matrix wird üblicherweise Phenol-Formaldehyd (PF) oder ein Epoxid (EP) verwendet. Die Deckschichten werden mit dem Kern verklebt oder anderweitig zusammengefügt, so dass die Sandwichplatte eine hohe Festigkeit und große Steifigkeit erhält.

Solche Sandwichplatten werden beispielsweise im Fußbodenbereich von Flugzeugkabinen eingesetzt. Dabei kommen meist sehr steife und gewichtsoptimierte Sandwichplatten zum Einsatz. Diese Sandwichplatten werden mit Verbindungselementen (Schrauben, Clipnut usw...) an der Fußbodenstruktur befestigt. Die Sandwichplatten haben eine konstante Dicke mit parallelen oberen und unteren Decklagen.

Steife und leichte Bauteile weisen jedoch oft ein akustisches Verhalten auf, welches unerwünscht ist, beispielsweise kann ein Trittschall als zu laut empfunden werden. Die beschriebene Bauweise der Sandwichplatten bedingt gutes Schwingverhalten, da sie sich wie eine gespannte, leichte und steife Membran verhalten kann. Zudem koppelt der Körperschall aus dem Fußbodengerüst sehr gut in eine solche Sandwichplatte ein und regt diese zum Schwingen an. Um das Schwingungsverhalten der Sandwichplatte und damit auch ein gegebenenfalls unerwünschtes akustisches Verhalten zu beeinflussen wurde bisher: (a) das Kernmaterial der Sandwichplatte, beispielsweise die Waben, mit Pasten und Granulaten gefüllt; oder (b) die Sandwichplatte flächig oder lokal mit Dämpfungsmaterial beklebt. Damit wird erreicht, dass beispielsweise Trittschall oder andere Geräusche gedämpft werden.

CN 206 419 620 U beschreibt ein Befestigungselement zum Befestigen einer elektrischen Pumpe an einem Chassis eines Fahrzeugs. Das Befestigungselement weist zwei voneinander beabstandete Schrauben auf, wovon eine mit der Pumpe und die andere mit dem Chassis verbunden werden kann. Die Schraubenköpfe sind in einem Gummiblock angeordnet. Der Gummiblock hat die Funktion, eine elektrische Isolierung zwischen den zwei Schrauben - und damit zwischen der Pumpe und dem Chassis - bereitzustellen.

### ZUSAMMENFASSUNG DER ERFINDUNG

Eine Aufgabe der vorliegenden Erfindung besteht daher darin, ein System bestehend aus einer Stützkernverbundplatte und einem Befestigungselement mit verbesserten akustischen Eigenschaften anzugeben.

Diese Aufgabe wird durch den Gegenstand nach dem unabhängigen Anspruch erreicht.

Gemäß der Erfindung umfasst ein System eine Stützkernverbundplatte und ein Befestigungselement, wobei das Befestigungselement zum Verringern oder Unterbinden einer Körperschallanregung ausgebildet ist, wobei das Befestigungselement aufweist: ein erstes Einlegeteil mit Gewinde und ein zweites Einlegeteil mit Gewinde; eine erste Hülse und eine zweite Hülse; und ein Dichtsystem, wobei das erste Einlegeteil in die erste Hülse eingeschraubt ist und wobei das zweite Einlegeteil in die zweite Hülse eingeschraubt ist, wobei das erste Einlegeteil und das zweite Einlegeteil entkoppelt und kraftschlüssig in das Dichtsystem eingebettet sind und wobei sich die erste Hülse durch die Stützkernverbundplatte erstreckt.

Gemäß einer Ausführungsform ist das Dichtsystem als dauerelastisches Elastomer, als Metall, oder als Kombination aus dauerelastischem Elastomer und Metall ausgebildet.

Gemäß einer weiteren Ausführungsform weist das dauerelastische Elastomer eine Oberflächenstrukturierung auf.

Gemäß einer weiteren Ausführungsform ist die Oberflächenstrukturierung einseitig oder beidseitig ausgebildet und weist eine wellenförmige Form auf.

Gemäß einer weiteren Ausführungsform sind das erste Einlegeteil und das zweite Einlegeteil innerhalb des Dichtsystems voneinander beabstandet.

Gemäß einer Ausführungsform umfasst die Stützkernverbundplatte wenigstens eine obere und eine untere Deckschicht, einen Stützkern, der zwischen den Deckschichten angeordnet ist. Die obere Deckschicht umfasst eine ebene Fläche. Die untere Deckschicht umfasst eine unebene Fläche. Der Stützkern erstreckt sich zwischen den Deckschichten.

Selbstverständlich erfasst die Erfindung auch eine Stützkernverbundplatte deren obere Deckschicht eine unebene Fläche umfasst und deren untere Deckschicht eine ebene Fläche umfasst. Die folgende Beschreibung umfasst beide Varianten.

Der Stützkern kann aus Polyurethanschaum oder aus einem Wabenkern gefertigt sein. Die obere Deckschicht umfasst eine ebene Fläche. Beispielsweise ist die Dicke der Deckschicht in einer Richtung senkrecht zur Fläche konstant. Die untere Deckschicht umfasst eine unebene Fläche. Die unebene Fläche kann die gesamte untere Deckschicht umfassen oder nur einen Teil der unteren Deckschicht ausbilden.

Die Dicke und Form der Stützkernverbundplatte, welche die beiden Deckschichten und den Stützkern umfasst, wird so ausgebildet, dass sich die für das jeweilige akustische Verhalten gewünschten Schwingungseigenschaften umsetzen lassen. Auch ist es möglich die Schwingungseigenschaften der Stützkernverbundplatte kundenspezifisch anzupassen. Beispielsweise können Dämpfungseigenschaften der Stützkernverbundplatte an die gewünschten akustischen oder mechanischen Anforderungen angepasst werden. Auch ist es möglich das Schwingverhalten der Stützkernverbundplatte so anzupassen, dass Schwingungen stärker oder weniger stark absorbiert, reflektiert oder eingekoppelt werden.

Gemäß einem Beispiel ändert sich die Profildicke der Stützkernverbundplatte. Die Profildicke kann sich in Längsrichtung, senkrecht zur Längsrichtung oder in einem beliebigen Winkel zur Längsrichtung ändern. Durch die sich ändernde Profildicke wird erschwert oder verhindert, dass die Sandwichplatte in den unteren Eigenmoden, im hörbaren Bereich, Schwingungen überträgt. Somit kann das Schwingverhalten der Stützkernverbundplatte angepasst werden, beispielsweise wird das Schwingverhalten geringer.

Gemäß einem Beispiel ist die unebene Fläche als Ausbauchung, Wölbung oder halbkugelförmige Form ausgebildet. Diese Ausprägung der unebenen Fläche kann integraler oder differentieller Bestandteil der Stützkernverbundplatte sein. Die Ausbauchung, Wölbung oder halbkugelförmige Form kann dreidimensional sein und kann die gesamte Stützkernverbundplatte oder einen Teil davon umfassen.

Gemäß einem Beispiel umfasst die Ausbauchung, Wölbung oder halbkugelförmige Form wenigstens einen Teil der unebenen Fläche. Beispielweise kann in einem Beispiel ein Bereich der unebenen Fläche eine Ausbauchung, Wölbung oder halbkugelförmige Form umfassen. Auch können mehrere nebeneinander angeordnete Ausbauchungen, Wölbungen oder halbkugelförmige Formen von der unebenen Fläche umfasst sein.

Gemäß einem Beispiel erstreckt sich der Stützkern dreidimensional in die Ausbauchung, Wölbung oder halbkugelförmige Form der unteren Deckschicht. Der Stützkern kann so ausgebildet sein, dass er formschlüssig mit der unteren Deckschicht ist.

Gemäß einem Beispiel ist die Stützkernverbundplatte einteilig oder mehrteilig ausgebildet. Eine mehrteilige Stützkernverbundplatte lässt sich beispielsweise modular anfertigen und kann in beliebigen Größen zusammengesetzt werden.

Gemäß einem Beispiel ist der Stützkern oder wenigstens eine der Deckschichten einteilig oder mehrteilig ausgebildet. Somit wird ein flexibler oder variabler Aufbau der Stützkernverbundplatte bereitgestellt. Dies ermöglicht eine einfache und flexible Herstellung.

Beispielhaft ist auch ein Versteifungsprofil zur Anordnung an eine Sandwichplatte mit ebenen Deckschichten angegeben, wobei das Versteifungsprofil eine unebene Fläche aufweist, welche als Ausbauchung, Wölbung oder halbkugelförmige Form ausgebildet ist. Das Versteifungsprofil ist im Wesentlichen wie die untere Deckschicht (oben beschrieben) ausgebildet. Es weist einen eigenen Kern auf, der wie der Stützkern der Stützkernverbundplatte ausgebildet sein kann. Das Versteifungsprofil kann einteilig oder mehrteilig ausgebildet sein.

Gemäß der Erfindung ist ein Befestigungselement für eine Stützkernverbundplatte angegeben, wobei das Befestigungselement zum Verringern oder Unterbinden einer Körperschallanregung ausgebildet ist. Dazu ist das Befestigungselement aus Metall und/oder aus einem Elastomer ausgebildet. Mit dem Befestigungselement kann die erforderliche Kraftübertragung beim Befestigen der Stützkernverbundplatte sichergestellt werden, so dass die akustischen Eigenschaften, wie oben beschrieben, erhalten bleiben.

Gemäß der Erfindung weist das Befestigungselement ein Dichtsystem auf. Das Dichtsystem kann zu einer erhöhten Gewährleistung der Dichtigkeit und der Designanforderung beim Einbau der Stützkernverbundplatte beispielsweise in ein Fußbodensystem in einem Flugzeug beitragen. Das Dichtsystem kann glatt oder strukturiert sein. Über das Material des Dichtsystems und dessen Oberflächenstrukturierung können die akustischen Eigenschaften der Stützkernverbundplatte beeinflusst werden. Das Befestigen der Stützkernverbundplatte mit dem einen oder mehreren Befestigungselementen kann mit einer weiteren Dichtung, beispielsweise ein Dichtband, kombiniert werden, welches seinerseits am Rand der Stützkernverbundplatte angeordnet wird.

Gemäß einem Beispiel weist das Dichtsystem ein dauerelastisches Elastomer auf, welches eine Oberflächenstrukturierung aufweist. Das Elastomer kann abhängig von den geforderten technischen Spezifikationen ausgewählt sein und/oder vom Einsatz des Befestigungsmittels abhängen. Das Material und die Oberflächenstrukturierung des Elastomers bestimmen die akustischen und/oder mechanischen Eigenschaften des Befestigungsmittels. Das Elastomer ist an die jeweiligen Bedürfnisse angepasst. Die Oberflächenstrukturierung kann beispielsweise wellenförmig sein oder andere Formen wie rechteckig, sägezahnförmig oder ähnliche Formen umfassen. Die Oberflächenstrukturierung kann beidseitig oder einseitig ausgebildet sein.

Die Erfindung verbessert die akustischen und/oder mechanischen Eigenschaften von Stützkernverbundplatten oder Sandwichplatten als auch die von Sandwichfußbodenplatten im Allgemeinen. Durch das Befestigungselement und ggf. die unebene Fläche der Stützkernverbundplatte, die als Ausbauchung, Wölbung oder halbkugelförmige Form ausgebildet ist, wird das Schwingverhalten und das akustische Verhalten der Stützkernverbundplatte beeinflusst bzw. spezifiziert. Die sich ändernde Profildicke der Stützkernverbundplatte trägt dazu bei. Des Weiteren ist die Erfindung für verschiedene Stützkernverbundplatten, beispielsweise für solche aus Laminatbauteilen, in allen Anwendungsbereichen einsetzbar.

Es sei darauf hingewiesen, dass die Merkmale der Ausführungsbeispiele der Stützkernverbundplatte auch für die Ausführungsformen des Systems als auch für das Versteifungsprofil gelten und umgekehrt. Außerdem können auch diejenigen Merkmale frei miteinander kombiniert werden, bei denen dies nicht explizit erwähnt ist.

Diese und weitere Aspekte der Erfindung werden unter Bezugnahme und mit Verweis auf die folgenden Ausführungen ersichtlich.

### KURZE BESCHREIBUNG DER ZEICHNUNGEN

Nachfolgend wird anhand der beigefügten Zeichnungen näher auf Ausführungsbeispiele der Erfindung eingegangen. Es zeigen:
- Fig. 1: eine perspektivische Ansicht einer Stützkernverbundplatte;
- Fig. 2: ein Querschnitt einer Stützkernverbundplatte;
- Fig. 3: ein Querschnitt einer zweiteiligen Stützkernverbundplatte;
- Fig. 4: eine perspektivische Ansicht einer weiteren Stützkernverbundplatte;
- Fig. 5: eine perspektivische Ansicht einer weiteren Stützkernverbundplatte;
- Fig. 6: ein Befestigungselement zum Befestigen einer Stützkernverbundplatte;
- Fig. 7: ein Beispiel eines Dichtsystems des Befestigungselements; und
- Fig. 8: ein weiteres Beispiel eines Dichtsystems des Befestigungselements.

### DETAILLIERTE BESCHREIBUNG VON AUSFÜHRUNGSFORMEN

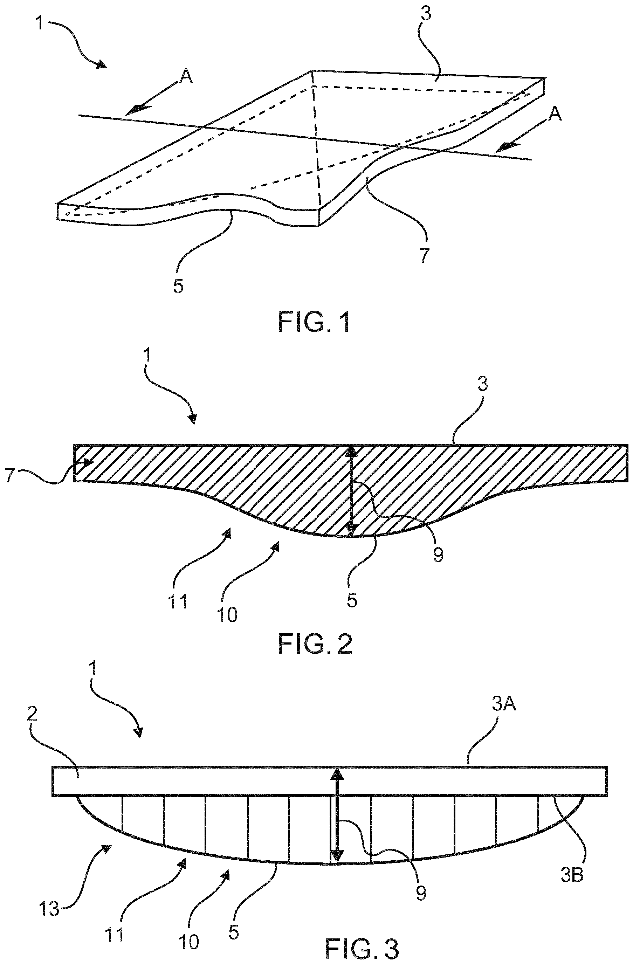

Fig. 1 zeigt eine Stützkernverbundplatte 1 in einer perspektivischen Ansicht. Eine obere Deckschicht 3 und eine untere Deckschicht 5 sind an einem Stützkern 7 angeordnet. Der Stützkern 7 erstreckt sich zwischen den Deckschichten 3, 5.

Die obere Deckschicht 3 weist eine ebene Fläche auf. Die untere Deckschicht 5 weist eine unebene Fläche auf, wie aus den folgenden Figuren ersichtlich ist, welche einen Schnitt entlang der Schnittebene A-A für verschiedene Ausführungsbeispiele zeigen.

Fig. 2 zeigt ein Querschnitt einer Stützkernverbundplatte 1. Der Stützkern 7 und die Stützkernverbundplatte 1 weisen eine sich ändernde Profildicke 9 senkrecht zur Längsrichtung der Stützkernverbundplatte 1 auf. In einem anderen Ausführungsbeispiel kann sich die Profildicke 9 in einem beliebigen Winkel zur Längsrichtung ändern. Durch die sich ändernde Profildicke 9 wird erschwert oder verhindert, dass die Stützkernverbundplatte in den unteren Eigenmoden, beispielsweise im hörbaren Bereich, Schwingungen überträgt. Somit wird das Schwingverhalten der Stützkernverbundplatte geringer.

In Fig. 2 ist eine einteilig geformte Stützkernverbundplatte 1 gezeigt. Die obere Deckschicht 3 weist eine ebene Fläche auf. Die untere Deckschicht 5 weist eine unebene Fläche 10 auf, die als Ausbauchung 11 oder Wölbung 11 ausgebildet ist. In anderen Ausführungsbeispielen ist die unebene Fläche 10 der untere Deckschicht 5 als halbkugelförmige Form 11 ausgebildet.

Die Ausbauchung 11 umfasst wenigstens einen Teil oder Bereich der unebenen Fläche 10 der unteren Deckschicht 5 und ist mit der unteren Deckschicht 5 integral ausgebildet, so dass die Ausbauchung 11 ein integraler Bestandteil der Stützkernverbundplatte 1 ist. In anderen Ausführungsformen ist die Ausbauchung 11, Wölbung 11 oder halbkugelförmige Form 11 integral mit der Stützkernverbundplatte 1 ausgebildet oder ist ein differentieller Bestandteil davon.

Der Stützkern 7 ist dreidimensional ausgebildet und erstreckt sich in die Ausbauchung 11 der unteren Deckschicht 5. Der Stützkern 7 ist ein Schaumkern. In anderen Ausführungsformen kann der Stützkern 7 ein Wabenkern oder dergleichen sein.

Fig. 3 zeigt einen Querschnitt einer zweiteiligen Stützkernverbundplatte 1. Die Stützkernverbundplatte 1 kann eine Sandwichplatte 2 mit ebenen Deckschichten 3A, 3B sein. In diesem Ausführungsbeispiel weist die Stützkernverbundplatte 1 eine Wölbung 11 oder Ausbauchung 11 auf. Eine der ebenen Deckschichten 3A, 3B der Sandwichplatte 2 bildet die obere Deckschicht 3 der Stützkernverbundplatte 1. Die andere ebene Deckschicht 3B grenzt an ein Versteifungsprofil 13. Das Versteifungsprofil 13 ist separat ausgebildet und weist eine unebene Fläche 10 auf, die als Ausbauchung 11 oder Wölbung 11 ausgebildet ist. Die Deckschicht 5 des Versteifungsprofils 13 bildet die untere Deckschicht 5 der Stützkernverbundplatte 1. Die Ausbauchung 11 oder Wölbung 11 kann die gesamte untere Deckschicht 5 umfassen oder wenigstens einen Teil davon. Die Profildicke 9 der Stützkernverbundplatte 1 ändert sich entlang deren Ausdehnung.

Die untere Deckschicht 5 des Versteifungsprofils 13 kann auch als halbkugelförmige Form 11 ausgebildet sein.

Die in den Figuren 1 bis 3 gezeigten Stützkernverbundplatten 1 können einen einteiligen oder mehrteiligen Stützkern 7 aufweisen. Des Weiteren kann wenigstens eine der Deckschichten 3, 5 einteilig oder mehrteilig ausgebildet sein.

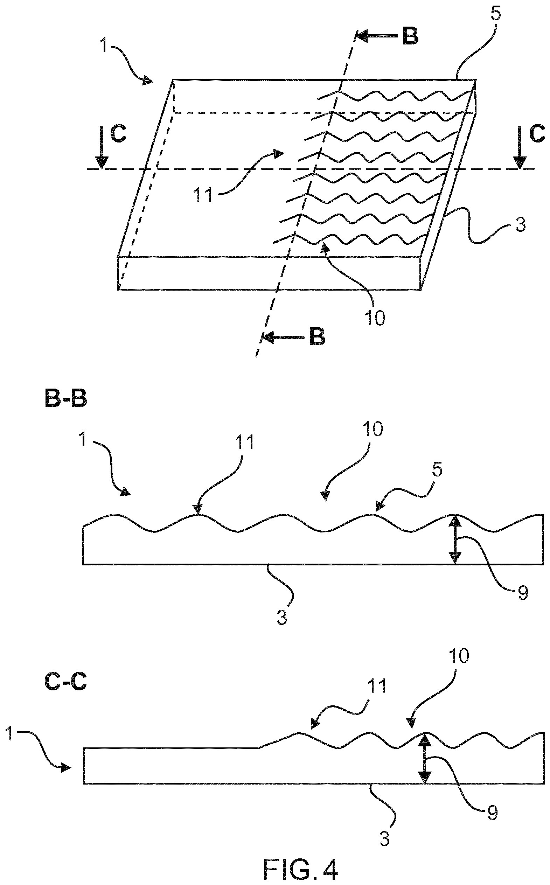

Fig. 4 zeigt eine perspektivische Ansicht einer Stützkernverbundplatte 1. Die untere Deckschicht 5 weist eine unebene Fläche 10 auf, die in diesem Ausführungsbeispiel die Hälfte der unteren Deckschicht 5 umfasst. Die obere Deckschicht 3 weist eine ebene Fläche auf. In anderen Ausführungsbeispielen kann die unebene Fläche 10 einen anderen Bereich der unteren Deckschicht 5 umfassen, beispielsweise einen Rand, der ein Drittel oder ein Viertel der Länge oder Breite der unteren Deckschicht 5 umfasst.

Die unebene Fläche 10 weist mehrere aneinander gereihte Wölbungen 11 auf. In anderen Ausführungsbeispielen umfasst die unebene Fläche 10 eine oder mehrere Ausbauchungen 11 oder eine oder mehrere halbkugelförmige Formen 11.

Ein Schnitt entlang der Linie B-B zeigt die dreidimensionale Form der Wölbung 11. Die Profildicke 9 der Stützkernverbundplatte 1 verändert sich entlang der Länge und Breite der unebenen Fläche. Die wird auch im Schnitt entlang der Linie C-C gezeigt. Dort ändert sich die Profildicke 9 im Bereich der unebenen Fläche 10 und ist außerhalb der unebenen Fläche 10 gleichförmig.

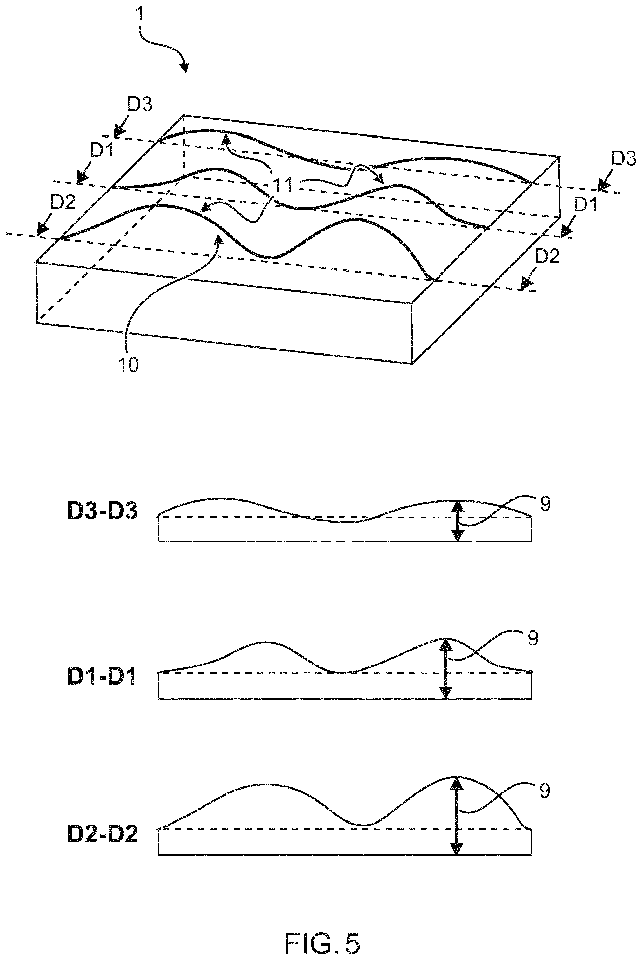

Fig. 5 zeigt eine perspektivische Ansicht einer Stützkernverbundplatte 1 mit sich ändernder Profildicke 9. In diesem Ausführungsbeispiel umfasst die unebene Fläche 10 die gesamte untere Deckschicht 5 nahezu vollständig. In anderen Beispielen kann die unebene Fläche 10 auch nur einen Teil der unteren Deckschicht 5 umfassen.

Die unebene Fläche 10 umfasst zwei Auswölbungen 11 die sich entlang der Länge und Breite der unebenen Fläche 10 erstrecken. Die Auswölbungen 11 sind entlang der Schnittlinien D1-D1, D2-D2, D3-D3 gezeigt. Die Profildicke 9 der Stützkernverbundplatte 1 verändert sich entlang deren Breite. Die zwei Auswölbungen 11 können entlang der Länge der Stützkernverbundplatte 1 bzw. der unebenen Fläche 10 gleich oder verschieden sein.

Die Profidicke 9 ändert sich entlang der Breite der unebenen Fläche 10 mit steigender Dicke. Entlang der Schnittlinie D3-D3 ist die Profildicke geringer als im Bereich entlang der Schnittlinie D2-D2, wo die Profildicke 9 am größten ist. Es ist auch möglich die unebene Fläche 10 so auszubilden, dass beispielsweise die Auswölbungen 11 die gleiche Form oder unterschiedliche Formen haben mit sich entsprechend ändernder Profildicke 9 der Stützkernverbundplatte 1.

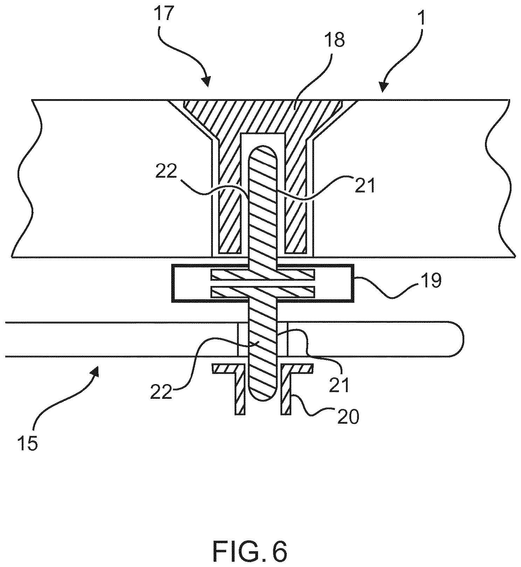

In Fig. 6 ist ein Befestigungselement 17 mit einem Dichtsystem 19 beim Befestigen einer Stützkernverbundplatte 1 gezeigt. Die Stützkernverbundplatte 1 wird an die Struktur 15 befestigt, die beispielsweise eine Bodenstruktur in einem Flugzeug sein kann. Die Stützkernverbundplatte 1 ist wie in einer mit Bezug auf die Figuren 1-5 beschriebenen Ausführungsbeispiele. Sie kann auch eine Sandwichplatte mit ebenen Deckschichten sein.

Das Befestigungselement 17 weist eine Hülse 18, 20 mit Innengewinde auf, beispielsweise ein sogenannter Clipnut. Zwei Einlegeteile 21 mit Gewinde 22, die als Stehbolzen ausgebildet sind, werden jeweils in eine Hülse 18, 20 geschraubt. Die Einlegeteile 21 sind entkoppelt und kraftschlüssig in das Dichtsystem 19 eingebettet.

Das Dichtsystem 19 ist als dauerelastisches Elastomer ausgebildet. Es kann auch aus einem Metall oder einer Kombination von Elastomer und Metall ausgebildet sein. Beispiele des Elastomers 19 sind in den folgenden Figuren gezeigt.

Das Befestigungselement 17 dient zum Verbinden der Stützkernverbundplatte 1 mit einer Struktur. Es ist dazu ausgebildet die Körperschallanregung der Stützkernverbundplatte 1 zu verringern, zu unterbinden oder gezielt Schwingungen in die Stützkernverbundplatte 1 einzukoppeln. Durch das Befestigungselement 17 wird die erforderliche Kraftübertragung von der Stützkernverbundplatte 1 auf die Struktur sichergestellt.

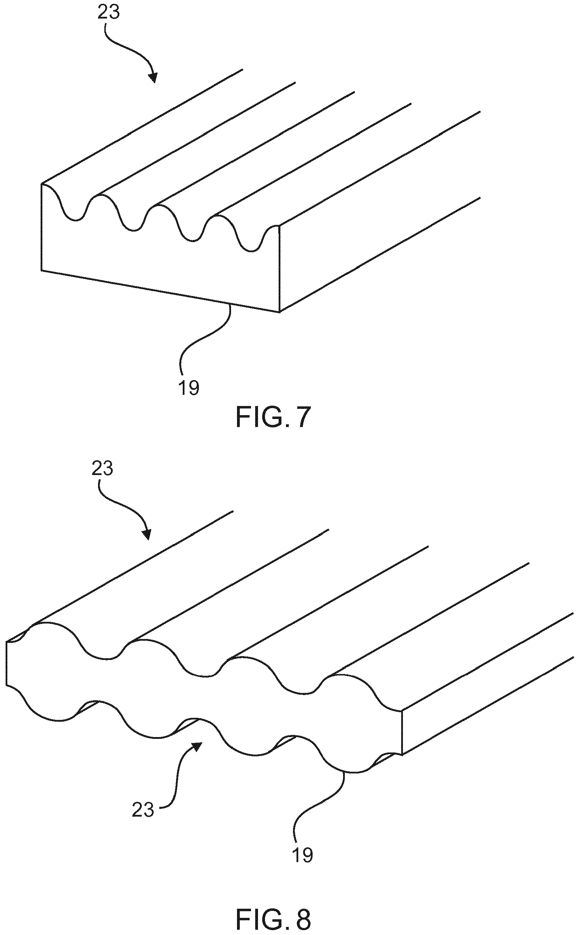

Fig. 7 und Fig. 8 zeigen jeweils ein Beispiel eines Dichtsystems 19. Das Dichtsystem 19 ist als dauerelastisches Elastomer ausgebildet, welches eine Oberflächenstrukturierung 23 aufweist. Die Oberflächenstrukturierung 23 ist einseitig oder beidseitig ausgebildet und weist eine wellenförmige Form auf.

Die Oberflächenstrukturierung 23 kann auch andere Formen annehmen. Beispielsweise kann die Oberflächenstrukturierung 23 wie die unebene Fläche (oben beschrieben) ausgebildet sein.

Die Kombination aus Material und Oberflächenstrukturierung des Elastomers bestimmt die akustischen Eigenschaften des Dichtsystems 19 und somit des Befestigungselements 17.

Die oberhalb beschriebenen Ausführungsbeispiele können in unterschiedlicher Art und Weise kombiniert werden. Insbesondere können auch Aspekte der Ausführungsformen des Befestigungselements und der Stützkernverbundplatte, des Systems sowie des Versteifungsprofils untereinander kombiniert werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. System, umfassend:
eine Stützkernverbundplatte (1);
und ein Befestigungselement (17), wobei das Befestigungselement zum Verringern oder Unterbinden einer Körperschallanregung ausgebildet ist, wobei das Befestigungselement (17) aufweist:
ein erstes Einlegeteil (21) mit Gewinde (22) und ein zweites Einlegeteil (21) mit Gewinde (22);
eine erste Hülse (18) und eine zweite Hülse (20);
ein Dichtsystem (19);
wobei das erste Einlegeteil in die erste Hülse eingeschraubt ist und wobei das zweite Einlegeteil in die zweite Hülse eingeschraubt ist;
wobei das erste Einlegeteil und das zweite Einlegeteil entkoppelt und kraftschlüssig in das Dichtsystem (19) eingebettet sind;
wobei sich die erste Hülse (18) durch die Stützkernverbundplatte (1) erstreckt.

2. System (1) nach Anspruch 1, wobei das Dichtsystem (19) als dauerelastisches Elastomer, als Metall, oder als Kombination aus dauerelastischem Elastomer und Metall ausgebildet ist.

3. System (1) nach Anspruch 2, wobei das dauerelastische Elastomer eine Oberflächenstrukturierung (23) aufweist.

4. System (1) nach Anspruch 3, wobei die Oberflächenstrukturierung einseitig oder beidseitig ausgebildet ist und eine wellenförmige Form aufweist.

5. System (1) nach einem der vorherigen Ansprüche,
wobei das erste Einlegeteil und das zweite Einlegeteil innerhalb des Dichtsystems voneinander beabstandet sind.

6. System nach einem der vorherigen Ansprüche, wobei die Stützkernverbundplatte umfasst:
wenigstens eine obere Deckschicht (3) und eine untere Deckschicht (5),
- einen Stützkern (7), der zwischen den Deckschichten angeordnet ist,
- wobei die obere Deckschicht eine ebene Fläche umfasst,
- wobei die untere Deckschicht eine unebene Fläche (10) umfasst,
wobei sich der Stützkern zwischen den Deckschichten erstreckt.

7. System nach einem der vorherigen Ansprüche, wobei sich eine Profildicke (9) der Stützkernverbundplatte ändert.

8. System nach einem der Ansprüche 6 oder 7, wobei die unebene Fläche als Ausbauchung (11), Wölbung (11) oder halbkugelförmige Form (11) ausgebildet ist.

9. System nach Anspruch 8, wobei die Ausbauchung, Wölbung oder halbkugelförmige Form wenigstens einen Teil der unebenen Fläche umfasst.

10. System nach einem der Ansprüche 8 oder 9, wobei der Stützkern sich dreidimensional in die Ausbauchung, Wölbung oder halbkugelförmige Form der unteren Deckschicht erstreckt.

11. System nach einem der vorherigen Ansprüche, wobei die Stützkernverbundplatte einteilig oder mehrteilig ausgebildet ist.

12. System nach einem der vorherigen Ansprüche, wobei der Stützkern und/oder wenigstens eine der Deckschichten einteilig oder mehrteilig ausgebildet ist.

## Claims

1. A system, comprising:
a support core composite panel (1);
and a fastening member (17), the fastening member being configured to reduce or eliminate structure-borne noise excitation, the fastening member (17) comprising:
a first insert member (21) with a thread (22), and a second insert member (21) with a thread (22);
a first sleeve (18) and a second sleeve (20);
a sealing system (19);
wherein the first insert member is screwed into the first sleeve and wherein the second insert member is screwed into the second sleeve;
wherein the first insert member and the second insert member are decoupled and frictionally embedded in the sealing system (19);
wherein the first sleeve (18) extends through the support core composite panel (1).

2. System (1) according to claim 1, wherein the sealing system (19) is formed as a permanently elastic elastomer, as a metal, or as a combination of permanently elastic elastomer and metal.

3. System (1) according to claim 2, wherein the permanently elastic elastomer has a surface structuring (23).

4. System (1) according to claim 3, wherein the surface structuring is formed on one or both sides and has an undulating shape.

5. A system (1) according to any one of the preceding claims,
wherein the first insert member and the second insert member are spaced apart within the sealing system.

6. A system according to any one of the preceding claims, wherein the support core composite panel comprises:
at least one upper cover layer (3) and one lower cover layer (5),
- a support core (7) disposed between the cover layers,
- wherein the upper cover layer comprises a flat surface,
- wherein the lower cover layer comprises an uneven surface (10),
wherein the support core extends between the cover layers.

7. A system according to any one of the preceding claims, wherein a profile thickness (9) of the support core composite panel changes.

8. A system according to any one of claims 6 or 7, wherein the uneven surface is in the form of a bulge (11), a camber (11) or a hemispherical shape (11).

9. The system of claim 8, wherein the bulge, camber or hemispherical shape comprises at least a portion of the uneven surface.

10. The system of any one of claims 8 or 9, wherein the support core extends three-dimensionally into the bulge, camber or hemispherical shape of the lower cover layer.

11. A system according to any one of the preceding claims, wherein the support core composite panel is formed in one piece or in multiple pieces.

12. System according to any one of the preceding claims, wherein the support core and/or at least one of the cover layers is formed in one piece or in multiple pieces.

## Revendications

1. Système, comprenant :
une plaque composite de noyau de support (1) ;
et un élément de fixation (17), l'élément de fixation étant conçu pour réduire ou supprimer une excitation par le bruit de structure, l'élément de fixation (17) comprenant :
une première pièce d'insertion (21) avec un filetage (22) et une deuxième pièce d'insertion (21) avec un filetage (22) ;
une première douille (18) et une deuxième douille (20) ;
un système d'étanchéité (19) ;
la première pièce d'insertion étant vissée dans le premier douille et la deuxième pièce d'insertion étant vissée dans le deuxième douille;
la première pièce d'insertion et la deuxième pièce d'insertion étant découplées et intégrées par adhérence dans le système d'étanchéité (19) ;
la première douille (18) s'étendant à travers la plaque composite de noyau de support (1).

2. Système (1) selon la revendication 1, dans lequel le système d'étanchéité (19) est réalisé sous forme d'élastomère à élasticité permanente, de métal, ou d'une combinaison d'élastomère à élasticité permanente et de métal.

3. Système (1) selon la revendication 2, dans lequel l'élastomère à élasticité permanente comprenant une structuration de surface (23).

4. Système (1) selon la revendication 3, dans lequel la structuration de surface est réalisée d'un côté ou des deux côtés et comprenant une forme ondulée.

5. Système (1) selon l'une quelconque des revendications précédentes,
dans lequel la première pièce d'insertion et la deuxième pièce d'insertion sont espacées l'une de l'autre à l'intérieur du système d'étanchéité.

6. Système selon l'une quelconque des revendications précédentes, dans lequel le plaque composite de noyau de support comprend :
au moins une couche de revêtement supérieure (3) et une couche de revêtement inférieure (5),
- un noyau de support (7) qui est disposé entre les couches de revêtement,
- dans lequel la couche de revêtement supérieure comprend une surface plane,
- dans lequel la couche de revêtement inférieure comprend une surface non plane (10),
dans lequel le noyau de support s'étendant entre les couches de revêtement.

7. Système selon l'une quelconque des revendications précédentes, dans lequel une épaisseur de profil (9) de la plaque composite de noyau de support varie.

8. Système selon l'une des revendications 6 ou 7, dans lequel la surface non plane est réalisée sous la forme d'un renflement (11), d'un bombage (11) ou d'une forme hémisphérique (11).

9. Système selon la revendication 8, dans lequel le renflement, le bombage ou la forme hémisphérique comprend au moins une partie de la surface non plane.

10. Système selon l'une des revendications 8 ou 9, dans lequel le noyau de support s'étend de manière tridimensionnelle dans le renflement, le bombage ou la forme hémisphérique de la couche de revêtement inférieure.

11. Système selon l'une quelconque des revendications précédentes, dans lequel la plaque composite de noyau de support est formée d'une seule pièce ou de plusieurs pièces.

12. Système selon l'une quelconque des revendications précédentes, dans lequel le noyau de support et/ou au moins l'une des couches de revêtement est formée d'une seule pièce ou de plusieurs pièces.
